# EUROPEAN PATENT APPLICATION

(11) **EP 2 783 801 A2**
(43) Date of publication of application: **01.10.2014**
(21) Application number: 14157417.8
(22) Date of filing: 03.03.2014
(51) Int. Cl.: B25J 9/16

(54) **Robot system and method for transferring workpiece**

(30) Priority: 14.03.2013 JP 2013052167
(71) Applicant: Kabushiki Kaisha Yaskawa Denki, Kitakyushu-shi, Fukuoka 806-0004 (JP)
(72) Inventor: Tomo, Toshihiro, Kitakyushu-shi, Fukuoka 806-0004 (JP); Shimono, Toshiaki, Kitakyushu-shi, Fukuoka 806-0004 (JP)
(74) Representative: Viering, Jentschura & Partner Patent- und Rechtsanwälte

(57) **Abstract**

A robot system 100 includes a robot hand 12, 31, 32 and a controller 6. The robot hand 12, 31, 32 includes a plurality of holders 121 configured to hold a workpiece placed on a workpiece placement stand 201 using at least one of electromagnetic force and suction force. The controller 6 is configured to control the plurality of holders 121 to hold the workpiece while controlling the plurality of holders 121 to switch between operation mode and nonoperation mode in accordance with at least one of a shape and a size of the workpiece.

## Description

### BACKGROUND

### FIELD OF THE INVENTION

The present invention relates to a robot system and a method for transferring a workpiece.

### DISCUSSION OF THE BACKGROUND

Japanese Unexamined Patent Application Publication No. 2001-317911 discloses a depalletizing apparatus that includes a robot arm. The robot arm includes a hand to hold a workpiece placed on a pallet. The depalletizing apparatus captures an image of the workpiece from above the pallet and detects the position of the workpiece based on the captured image. The robot arm is moved based on the detected position of the workpiece, and the hand holds the workpiece.

The contents of Japanese Unexamined Patent Application Publication No. 2001-317911 are incorporated herein by reference in their entirety.

Unfortunately, with the depalletizing device recited in Japanese Unexamined Patent Application Publication No. 2001-317911, the hand (specifically, a workpiece holding portion of the hand) is not able to hold a workpiece when the shape and size of the hand largely differ from the shape and size of the workpiece. Thus, the hand may not be able to hold a workpiece when the workpiece varies in shape and/or size. This is especially true when the hand is of the type that utilizes electromagnetic force or suction force to hold a workpiece.

The present invention has been made in view of the above-described circumstances, and it is one object of the present invention to provide a robot system and a method for transferring a workpiece that ensure holding of any workpieces that vary in shape and/or size.

### SUMMARY

According to one aspect of the present disclosure, a robot system 100 includes a robot hand 12, 31, 32 and a controller 6. The robot hand 12, 31, 32 includes a plurality of holders 121 configured to hold a workpiece placed on a workpiece placement stand 201 using at least one of electromagnetic force and suction force. The controller 6 is configured to control the plurality of holders 121 to hold the workpiece while controlling the plurality of holders 121 to switch between operation mode and nonoperation mode in accordance with at least one of a shape and a size of the workpiece.

With the robot system according to the one aspect of the present disclosure, as described above, the controller controls a plurality of holders to hold a workpiece while controlling the plurality of holders to switch between operation mode and nonoperation mode in accordance with the shape or size of the workpiece. This ensures that the plurality of holders switch to operation mode in accordance with the shape or size of the workpiece. This, in turn, ensures holding of the workpiece even when the workpiece varies in shape and/or size.

According to another aspect of the present disclosure, a method for transferring a workpiece includes switching a plurality of holders 121 between operation mode and nonoperation mode in accordance with at least one of a shape and a size of the workpiece. The plurality of holders 121 are mounted on a robot hand 12, 31, 32 and configured to hold the workpiece placed on a workpiece placement stand 201 using at least one of electromagnetic force and suction force. The workpiece is held while the plurality of holders 121 are controlled to switch between operation mode and nonoperation mode.

With the method for transferring a workpiece according to the other aspect of the present disclosure, as described above, a plurality of holders mounted on a robot hand are switched between operation mode and nonoperation mode in accordance with the shape or size of the workpiece. This ensures that the plurality of holders switch to operation mode in accordance with the shape or size of the workpiece. This, in turn, ensures holding of the workpiece even when the workpiece varies in shape and/or size.

The above-described configurations ensure holding of any workpieces that vary in shape and/or size.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a schematic representation of a robot system according to an embodiment;
FIG. 2 is a block diagram of the robot system according to the embodiment;
FIG. 3 is a perspective view of a depalletizing robot in the robot system according to the embodiment;
FIG. 4 is a plan view of the depalletizing robot in the robot system according to the embodiment;
FIG. 5 is a perspective view of a robot hand of the depalletizing robot in the robot system according to the embodiment;
FIG. 6 is a plan view of the robot hand of the depalletizing robot in the robot system according to the embodiment;
FIG. 7 is a bottom view of the robot hand of the depalletizing robot in the robot system according to the embodiment;
FIG. 8 is a diagram showing how the robot hand in the robot system according to the embodiment holds a workpiece disposed approximately parallel to sides of a pallet;
FIG. 9 is a diagram showing how the robot hand in the robot system according to the embodiment holds a workpiece disposed orthogonal to sides of a pallet;
FIG. 10 is a diagram showing a state where the robot hand in the robot system according to the embodiment is at a right upper corner of the pallet;
FIG. 11 is a diagram showing a state where the robot hand in the robot system according to the embodiment is at a left upper corner of the pallet;
FIG. 12 is a diagram showing a state where the robot hand in the robot system according to the embodiment is at a right lower corner of the pallet;
FIG. 13 is a diagram showing a state where the robot hand in the robot system according to the embodiment is at a left lower corner of the pallet;
FIG. 14 is a perspective view of a detection robot in the robot system according to the embodiment;
FIG. 15 is a plan view of a robot hand of the detection robot in the robot system according to the embodiment;
FIG. 16 is a flowchart of operations of the robot system according to the embodiment;
FIG. 17 is a diagram illustrating an operation of placing a workpiece and an operation of detecting an arrangement state of the workpiece by the robot system according to the embodiment;
FIG. 18 is a diagram illustrating an operation of holding a workpiece by the robot system according to the embodiment;
FIG. 19 is a plan view of a robot hand according to a first modification of the embodiment; and
FIG. 20 is a plan view of a robot hand according to a second modification of the embodiment.

### DESCRIPTION OF THE EMBODIMENTS

The embodiments will now be described with reference to the accompanying drawings, wherein like reference numerals designate corresponding or identical elements throughout the various drawings.

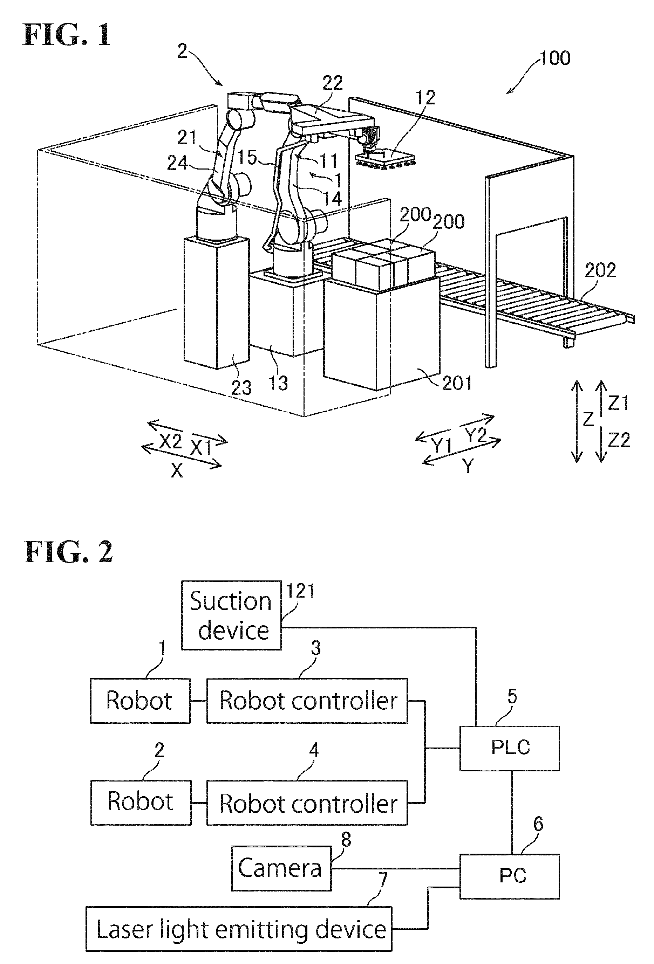

First, a configuration of a robot system 100 according to an embodiment will be described by referring to FIGs. 1 to 15.

As shown in FIG. 1, the robot system 100 includes a depalletizing robot 1 and a detection robot 2. The detection robot 2 detects a workpiece 200. Examples of the depalletizing robot 1 and the detection robot 2 include, but are not limited to, a perpendicularly articulated robot. A pallet 201 is disposed adjacent to (on an X1 direction side of) the depalletizing robot 1 and the detection robot 2. On the pallet 201, a plurality of workpieces 200 of different sizes and shapes are stacked. Examples of the workpiece 200 include, but are not limited to, a box-shaped workpiece. The pallet 201 has an approximately rectangular shaped portion (that is, a box-shape having walls). In plan view, the approximately rectangular shaped portion of the pallet 201 surrounds the workpieces 200. A conveyor 202 is disposed adjacent to (on a Y2 direction side of) the depalletizing robot 1. The conveyor 202 receives (and transfers) the workpiece 200. The pallet 201 is an example of the "workpiece placement stand".

As shown in FIG. 2, the depalletizing robot 1 is coupled to a robot controller 3. The detection robot 2 is coupled to a robot controller 4. The robot controller 3 and the robot controller 4 are coupled to a PLC (programmable logic controller) 5. The PLC 5 is coupled to a PC (Personal Computer) 6. The PC 6 controls an overall operation of the robot system 100. The PC 6 is also coupled to a laser light emitting device 7 and a camera 8. The laser light emitting device 7 and the camera 8 detect the arrangement state of the workpiece 200. The PC 6 is an example of the "controller".

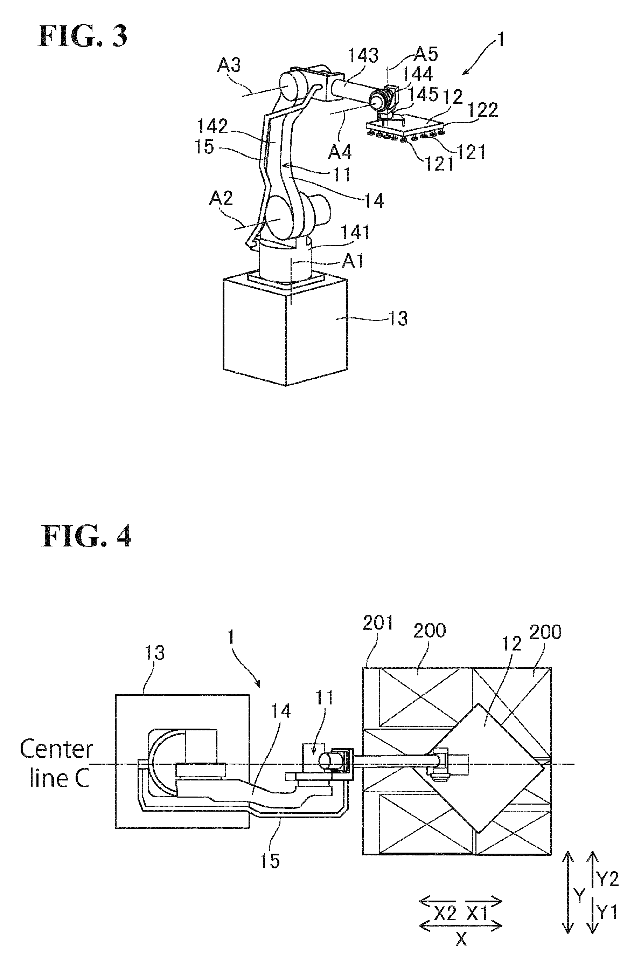

As shown in FIG. 3, the depalletizing robot 1 includes a robot main body 11 and a robot hand 12. The robot hand 12 is mounted on the distal end of the robot main body 11 in order to suck and hold the workpiece 200 placed on the pallet 201. The robot main body 11 includes a base 13 and a robot arm 14. The depalletizing robot 1 includes a cable 15 and other elements coupled to the robot arm 14.

The base 13 is secured to an installation surface such as a floor, a wall, and a ceiling. The robot arm 14 has five degrees of freedom. The robot arm 14 includes a plurality of arm structures. An arm structure 141 is coupled to the base 13 in a rotatable manner about a rotation axis A1, which is perpendicular to the installation surface. An arm structure 142 is coupled to the arm structure 141 in a rotatable manner about a rotation axis A2, which is perpendicular to the rotation axis A1. An arm structure 143 is coupled to the arm structure 142 in a rotatable manner about a rotation axis A3, which is parallel to the rotation axis A2. An arm structure 144 is coupled to the arm structure 143 in a rotatable manner about a rotation axis A4, which is parallel to the rotation axis A3. An arm structure 145 is coupled to the arm structure 144 in a rotatable manner about a rotation axis A5, which is perpendicular to the rotation axis A4. It is noted that "parallel" and "perpendicular", as used herein, are not only intended to mean precisely "parallel" and "perpendicular", respectively, but also intended more broadly to encompass slight differences from being "parallel" and "perpendicular". Each of the rotation axes A1 to A5 is equipped with a servo motor. Each servo motor includes an encoder to detect the rotation position of the servo motor. Each servo motor is coupled to the robot controller 3. Thus, each servo motor operates based on a command from the robot controller 3.

As shown in FIG. 4, in plan view, the depalletizing robot 1 is asymmetric with respect to a center line C, which is aligned in an X direction, in which the robot arm 14 of the depalletizing robot 1 extends, such that the robot arm 14 protrudes to one side (a Y1 direction side) of a Y direction. Similarly, the cable 15 also protrudes to the Y1 direction side.

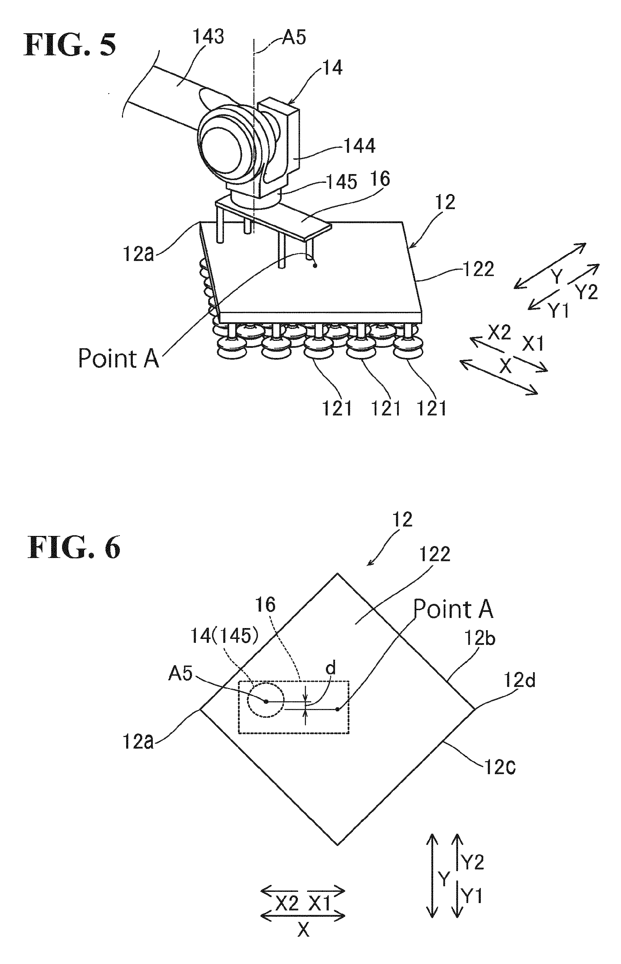

As shown in FIGs. 5 and 6, a base portion (which is on an X2 direction side) of the robot hand 12 is coupled to the robot arm 14 (more specifically, to the arm structure 145) such that in plan view, a perpendicular turning axis A5 of the portion (that is, the arm structure 145) of the robot arm 14 to which the base portion of the robot hand 12 is coupled is apart from the geometrical center (the point A, which is the geometrical center of gravity) of the robot hand 12. Specifically, the robot hand 12 has an approximately square shape in plan view, and is coupled to the robot arm 14 at a position adjacent to a corner 12a of the base portion of the approximately square (including orthogonal sides) shape of the robot hand 12.

As shown in FIG. 6, in plan view, the base portion of the robot hand 12 coupled to the robot arm 14 is at a position offset from the geometrical center of the robot hand 12 (that is, from the point A) by a predetermined distance d in the Y direction (more specifically, to a Y2 direction), which is orthogonal to the X direction, in which the robot arm 14 extends.

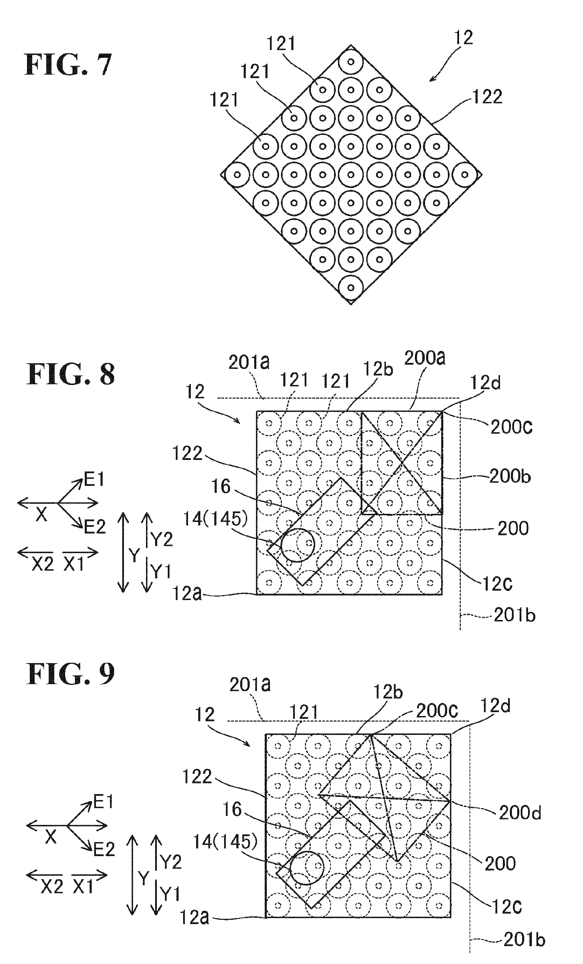

As shown in FIGs. 5 and 7, the robot hand 12 includes a plurality of suction devices 121 and a robot hand main body 122. The plurality of suction devices 121 hold the workpiece 200 placed on the pallet 201 by gaseous suction force (or suction force). The plurality of suction devices 121 are mounted on the robot hand main body 122. The suction devices 121 of the robot hand 12 are each independently coupled to an air sucking tube (not shown). Air is inhaled through the tube and thus the workpiece 200 is sucked (held) onto the suction device 121. The suction devices 121 are coupled to the PLC 5 (see FIG. 2). Through the PLC 5, the PC 6 controls ON and OFF of the air sucking operation of the suction devices 121 (that is, switches between operation mode and nonoperation mode). In this embodiment, as shown in FIG. 7, the suction devices 121 are approximately evenly disposed over the surface of the robot hand 12 (robot hand main body 122) in plan view. Specifically, 41 suction devices 121 are disposed over the surface of the robot hand main body 122 in a houndstooth pattern. More specifically, five suction devices 121, four suction devices 121, five suction devices 121, four suction devices 121, five suction devices 121, four suction devices 121, five suction devices 121, four suction devices 121, and five suction devices 121 are arranged along the sides of the approximately square shape of the robot hand main portion 122. The PC 6 controls each of the 41 suction devices 121 to independently switch between operation mode and nonoperation mode. The suction device 121 is an example of the "holder".

As shown in FIGs. 8 and 9, in this embodiment, the PC 6 controls the robot hand 12 to hold the workpiece 200 while controlling the suction devices 121 to switch between operation mode and nonoperation mode independently from each other in accordance with the shape (such as rectangular shape) or the size (such as the area of the workpiece 200 in plan view) of the workpiece 200. Specifically, the PC 6 controls at least one suction device 121 among the suction devices 121 to switch to operation mode, the at least one suction device 121 being disposed in a portion of the robot hand 12 overlapping the workpiece 200, controls the at least one suction device 121 to hold the workpiece 200, and controls the rest of the suction devices 121 to switch to nonoperation mode. When a suction device 121 partially overlaps the workpiece 200, it is possible to switch such suction device 121 into either operation mode or nonoperation mode. It is also possible to switch a suction device 121 to operation mode when equal to or larger than a predetermined area of the suction device 121 overlaps the workpiece 200.

In this embodiment, based on an image of the workpiece 200 captured by the camera 8 of the robot 2, the PC 6 controls at least one suction device 121 among the suction devices 121 to switch to operation mode, the at least one suction device 121 being disposed in a portion of the robot hand 12 overlapping the workpiece 200, controls the at least one suction device 121 to hold the workpiece 200, and controls the rest of the suction devices 121 to switch to nonoperation mode. When the workpiece 200 is smaller than the robot hand 12 in plan view as shown in FIG. 8, those suction devices 121 disposed in the portion of the robot hand 12 overlapping the workpiece 200 switch to operation mode. When the workpiece 200 is larger than the robot hand 12 in plan view, all the suction devices 121 switch to operation mode. The portion of the robot hand 12 where those suction devices 121 to switch to operation mode are disposed is a portion where the robot hand 12 keeps overlapping the workpiece 200 for the period of time from when the workpiece 200 is held until when the workpiece 200 is placed onto the conveyer 202.

As show in FIG. 8, when sides 200a and 200b of the workpiece 200 are respectively approximately parallel to sides 201a and 201b of the pallet 201, the robot arm 14 moves (rotates) the workpiece 200 in the following manner to hold the workpiece 200. In plan view, two orthogonal sides 12b and 12c (outer edges) of the robot hand 12 at the distal end of the robot hand 12 respectively overlap the sides 200a and 200b of the workpiece 200. At the same time, in plan view, a corner 12d of the robot hand 12 at the distal end of the robot hand 12 overlaps a corner 200c of the workpiece 200. Even when the workpiece 200 is disposed in the vicinity of a corner or the center of the pallet, the workpiece 200 is held such that the two sides 12b and 12c (outer edges) of the robot hand 12 overlap two of the four sides of the workpiece 200, and such that the corner 12d of the robot hand 12 at the distal end of the robot hand 12 overlaps one of the four corners of the workpiece 200.

As shown in FIG. 9, when the four sides of the workpiece 200 are orthogonal to the two sides 201a and 201b of the pallet 201, the robot arm 14 moves (rotates) the workpiece 200 in the following manner to hold the workpiece 200. In plan view, the two orthogonal sides 12b and 12c (outer edges) of the robot hand 12 at the distal end of the robot hand 12 overlap the two corners 200c and 200d of the workpiece 200.

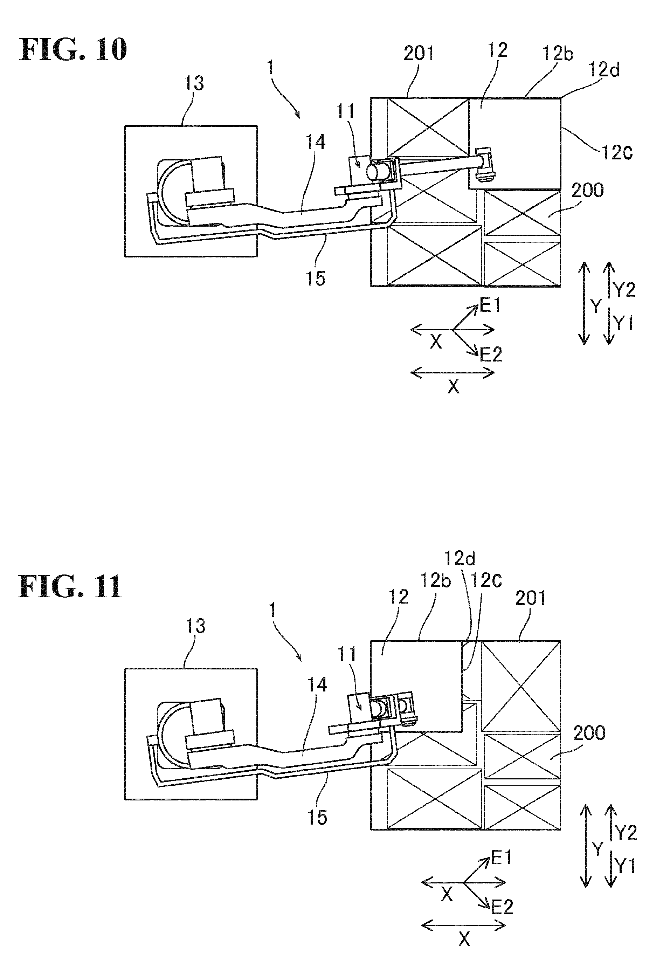

As shown in FIGs. 10 to 13, the PC 6 controls the robot hand 12 to hold the workpiece 200 placed on the pallet 201 while controlling the robot arm 14 to turn the suction devices 121 such that the distal ends of the suction devices 121 are oriented in a direction (E1 or E2 direction) crossing the X direction, in which the robot arm 14 extends.

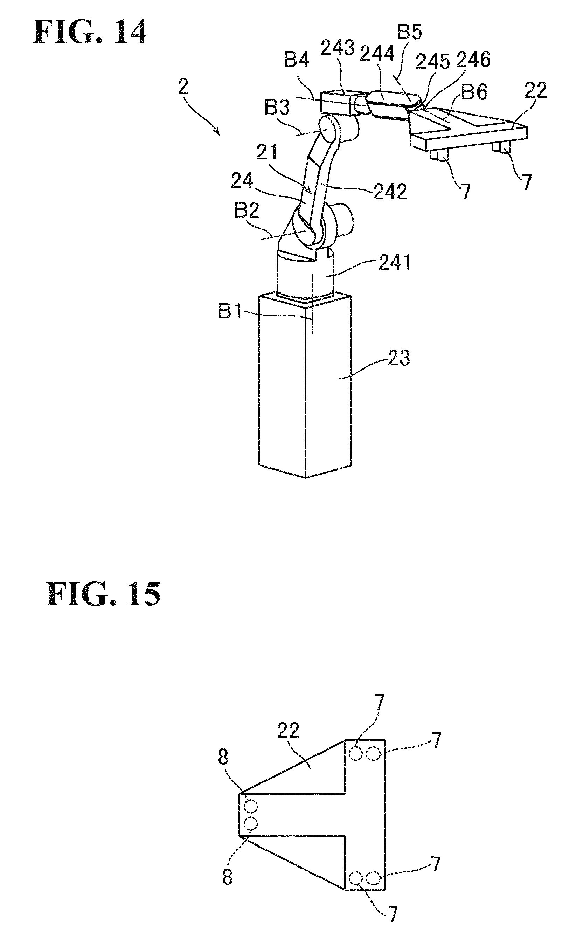

As shown in FIG. 14, the robot 2 includes a robot main body 21 and a robot hand 22. The robot hand 22 is mounted on the distal end of the robot main body 21. The robot main body 21 includes a base 23 and a robot arm 24.

The base 23 is secured to an installation surface such as a floor, a wall, and a ceiling. The robot arm 24 has six degrees of freedom. The robot arm 24 includes a plurality of arm structures. An arm structure 241 is coupled to the base 23 in a rotatable manner about a rotation axis B1, which is perpendicular to the installation surface. An arm structure 242 is coupled to the arm structure 241 in a rotatable manner about a rotation axis B2, which is perpendicular to the rotation axis B1. An arm structure 243 is coupled to the arm structure 242 in a rotatable manner about a rotation axis B3, which is parallel to the rotation axis B2. An arm structure 244 is coupled to the arm structure 243 in a rotatable manner about a rotation axis B4, which is perpendicular to the rotation axis B3. An arm structure 245 is coupled to the arm structure 244 in a rotatable manner about a rotation axis B5, which is perpendicular to the rotation axis B4. An arm structure 246 is coupled to the arm structure 245 in a rotatable manner about a rotation axis B6, which is perpendicular to the rotation axis B5. It is noted that "parallel" and "perpendicular", as used herein, are not only intended to mean precisely "parallel" and "perpendicular", respectively, but also intended more broadly to encompass slight differences from being "parallel" and "perpendicular". Each of the rotation axes B1 to B6 is equipped with a servo motor (joint). Each servo motor includes an encoder to detect the rotation position of the servo motor. Each servo motor is coupled to the robot controller 4. Thus, each servo motor operates based on a command from the robot controller 4. The robot arm 24 is an example of the "second robot arm".

As shown in FIG. 15, the robot hand 22 includes the laser light emitting device 7 and the camera 8 (that is, a stereoscopic camera). The laser light emitting device 7 emits laser light to the workpiece 200. The camera 8 detects the laser light reflected from the workpiece 200. The laser light emitting device 7 is an example of the "detector". The camera 8 is an example of the "detector" and the "image capture device". The laser light emitting device 7 emits, for example, cross-shaped laser light (that is, laser light crossing each other) to the workpiece 200. At the same time, the camera 8 detects (that is, captures an image of) the laser light reflected from the workpiece 200. Then, based on the detection result (that is, the captured image), the PC 6 calculates (or measures) an arrangement state of the workpiece 200 (such as the height of the workpiece 200 (more specifically, the height position of the upper surface of the workpiece 200), and the rotational angle, position, shape, and size of the workpiece 200). Then, in this embodiment, the PC 6 controls the robot arm 14 to move based on the arrangement state of the workpiece 200 detected by the laser light emitting device 7 and the camera 8, and controls the robot hand 12 to hold the workpiece 200 placed on the pallet 201.

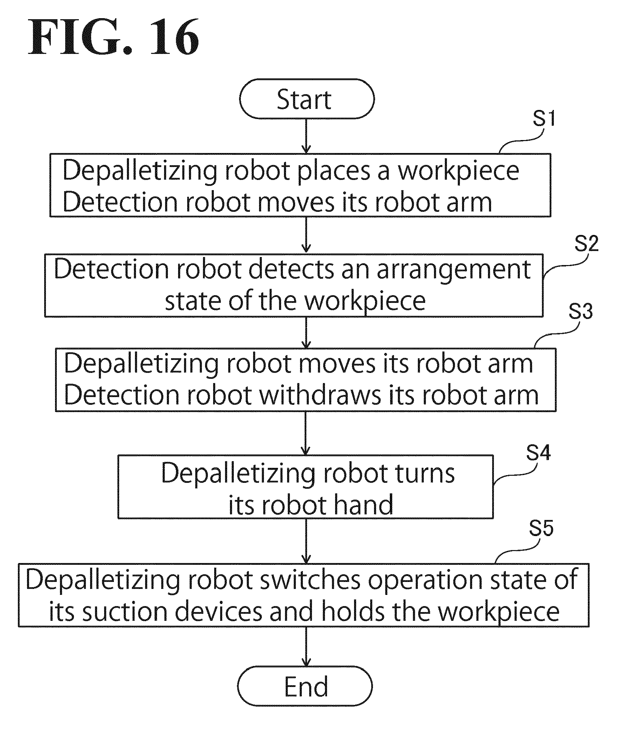

Next, operations of the robot system 100 according to this embodiment will be described by referring to FIGs. 16 to 18.

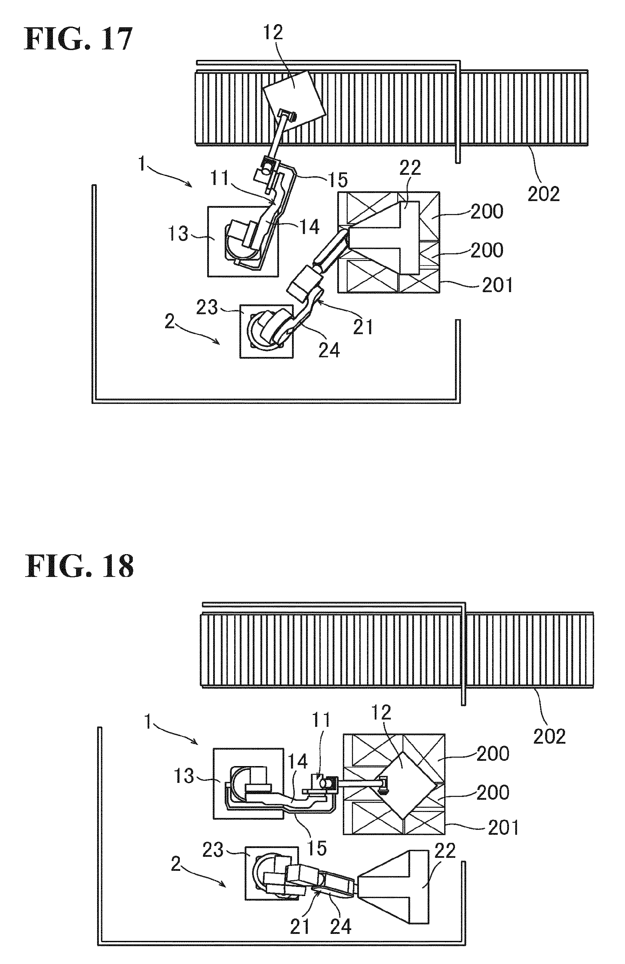

First, as shown in FIG. 16, at step S1, based on the latest detection operation by the laser light emitting device 7 and the camera 8 detecting the arrangement state of the workpiece 200 disposed on the uppermost level of the pallet 201, the robot hand 12 of the robot arm 14 holds the workpiece 200, and the robot arm 14 moves to place the workpiece 200 onto the conveyor 202, as shown in FIG. 17.

Simultaneously with the placement operation of the workpiece 200 by the robot arm 14 (or simultaneously with the transfer operation of the workpiece 200), the robot arm 24 moves to arrange the robot hand 22 (the laser light emitting device 7 and the camera 8), which are mounted on the robot arm 24, over the pallet 201.

Then, at step S2, the laser light emitting device 7 emits laser light to the workpiece 200, and the camera 8 captures an image of the laser light reflected from the workpiece 200 so as to detect an arrangement state (such as height, shape, and size) of a workpiece 200 next to be held on the pallet 201. Then, the next-to-be-held workpiece 200 (which is, for example, disposed on the uppermost level) is selected among a plurality of detected workpieces 200. Here, a selection is also made as to which suction devices 121 to switch to operation mode and which suction devices 121 to switch to nonoperation mode at step S5, described later.

Next, at step S3, as shown in FIG. 18, the robot arm 14 moves to a position over the pallet 201. Then, simultaneously with the movement operation of the robot arm 14, the robot arm 24 is withheld in a direction apart from the pallet 201 from the position adjacent to the pallet 201 in order to avoid collision with the robot arm 14.

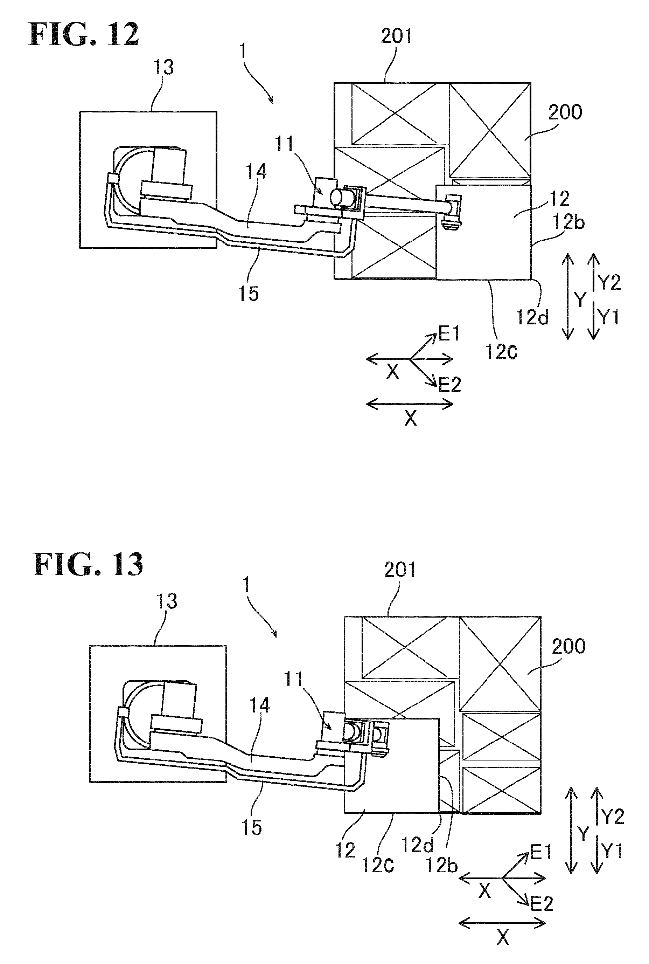

Next, at step S4, when the workpiece 200 to be held is disposed on, for example, the Y2 direction side (or on the Y1 direction side), which is orthogonal to the X direction, then as shown in FIGs. 10 and 11 (or FIGs. 12 and 13), the robot arm 14 turns the robot hand 12 by approximately 45 degrees to the Y2 direction side (or to the Y1 direction side) from a basic state (see FIG. 4). Then, the robot hand 12 moves to a position over the next-to-be-held workpiece 200. Then, at step S5, the robot hand 12 holds the workpiece 200 such that in plan view, at least one suction device 121 among the suction devices 121 that is disposed in a portion of the robot hand 12 overlapping the workpiece 200 switches to operation mode, while the rest of the suction devices 121 switch to nonoperation mode. Then, the processing returns to step S1, where the workpiece 200 is placed onto the conveyor 202. After the workpiece 200 is placed on the conveyor 202, all the suction devices 121 are switched to nonoperation mode.

Then, the operations at steps S1 to S5 are repeated until no workpieces 200 are left in the pallet 201, and thus the depalletizing processing of the workpieces 200 by the robot hand 12 completes.

As has been described hereinbefore, in this embodiment, the PC 6 controls the robot hand 12 to hold the workpiece 200 while controlling the suction devices 121 to switch between operation mode and nonoperation mode in accordance with the shape or the size of the workpiece 200. This enables the suction devices 121 to switch to operation mode in accordance with the shape or the size of the workpiece 200. This, in turn, ensures holding of any workpieces 200 that vary in shape and/or size.

In this embodiment, as described above, the PC 6 controls at least one suction device 121 among the suction devices 121 to switch to operation mode, the at least one suction device 121 being disposed in a portion of the robot hand 12 overlapping the workpiece 200 in plan view, controls the at least one suction device 121 to hold the workpiece 200, and controls the rest of the suction devices 121 to switch to nonoperation mode. Thus, the suction devices 121 readily match the shape or the size of the workpiece 200 by switching the suction devices 121 to operation mode. This facilitates holding of any workpieces 200 that vary in shape and/or size. When the robot system 100 has a limited amount of air suction, it is possible to control those suction devices 121 disposed in portions of the robot hand 12 other than the portion overlapping the workpiece 200 to switch to nonoperation mode. This increases the amount of air suction on the suction devices 121 in operation mode and enhances the suction force of the suction devices 121 in operation mode.

Also in this embodiment, as described above, the laser light emitting device 7 and the camera 8 detect the shape or the size of the workpiece 200 placed on the pallet 201. The PC 6 controls the robot hand 12 to hold the workpiece 200 while controlling the suction devices 121 to switch between operation mode and nonoperation mode in accordance with the shape or the size of the workpiece 200 detected by the laser light emitting device 7 and the camera 8. Thus, the laser light emitting device 7 and the camera 8 detect the shape or the size of the workpiece 200, and in accordance with the shape or the size of the workpiece 200, the suction devices 121 are readily switched between operation mode and nonoperation mode.

Also in this embodiment, as described above, based on an image of the workpiece 200 captured by the camera 8, the PC 6 controls at least one suction device 121 among the suction devices 121 to switch to operation mode, the at least one suction device 121 being disposed in a portion of the robot hand 12 overlapping the workpiece 200, controls the at least one suction device 121 to hold the workpiece 200, and controls the rest of the suction devices 121 to switch to nonoperation mode. Thus, the shape or the size of the workpiece 200 is readily detected based on the image of the workpiece 200 captured by the camera 8.

Also in this embodiment, as described above, the PC 6 controls each of the suction devices 121 to independently switch between operation mode and nonoperation mode. Thus, the suction devices 121 readily switch to operation mode or nonoperation mode in accordance with the shape or the size of the workpiece 200.

Also in this embodiment, as described above, the PC 6 controls the robot hand 12 to hold the workpiece 200 while controlling the robot hand 12 to rotate such that the two orthogonal sides of the robot hand 12 at the distal end of the robot hand 12 are respectively approximately parallel to two sides of the pallet 201, and while controlling the suction devices 121 to switch between operation mode and nonoperation mode in accordance with the shape of the workpiece 200. Thus, even when an approximately rectangular workpiece 200 is disposed at a corner of the approximately rectangular shaped portion of the pallet 201, the outer edge of the robot hand 12 can be disposed along the outer edge of the approximately rectangular shape of the workpiece 200. Thus, the workpiece 200 can be held with the robot hand 12 overlapping the workpiece 200.

Also in this embodiment, as described above, the suction devices 121 are approximately evenly disposed over the surface of the robot hand 12 in plan view. Thus, as opposed to the case where the suction devices 121 are unevenly disposed over the surface of the robot hand 12, the workpiece 200 is reliably held at any position of the robot hand 12 with the suction devices 121 overlapping the workpiece 200.

Obviously, numerous modifications and variations of the present disclosure are possible in light of the above teachings. It is therefore to be understood that within the scope of the appended claims, the present disclosure may be practiced otherwise than as specifically described herein.

For example, the above-described embodiment has been illustrated as using two robots, namely, the depalletizing robot having five degrees of freedom and the detection robot having six degrees of freedom to detect an arrangement state of the workpiece disposed on the pallet and to hold and transfer the workpiece. It is also possible to use a single two-arm robot to detect an arrangement state of the workpiece disposed on the pallet and to hold and transfer the workpiece. The number of control axes for each of the depalletizing robot and the detection robot is selectable conveniently. For example, it is possible to use a robot arm having four degrees of freedom or a robot arm having more than four degrees of freedom for each of the depalletizing robot and the detection robot.

Also in the above-described embodiment, suction force is used to hold the workpiece. It is also possible to use electromagnetic force (that is, magnetic force using a magnet) to hold the workpiece.

Also in the above-described embodiment, 41 suction devices are provided on the robot hand. The robot hand may include any other number of the suction devices than 41.

Also in the above-described embodiment, the workpiece is held such that at least one suction device among the suction devices that is disposed in a portion of the robot hand overlapping the workpiece in plan view switches to operation mode, and the rest of the suction devices switch to nonoperation mode. Another possible example is that some of the suction devices disposed in the portion of the robot hand overlapping the workpiece switch to nonoperation mode.

Also in the above-described embodiment, the portion of the robot hand where the suction devices to switch to operation mode are disposed is a portion where the robot hand keeps overlapping the workpiece for the period of time from when the workpiece is held until when the workpiece is placed onto the conveyer. Another possible example is that at the start of holding of the workpiece, some of the suction devices (suction devices disposed in the vicinity of the outer edge of the workpiece) disposed in the portion of the robot hand overlapping the workpiece switch to nonoperation mode, and then all the suction devices disposed in the portion of the robot hand overlapping the workpiece switch operation mode. This eliminates or minimizes erroneous holding of a workpiece adjacent to the workpiece actually to be held.

Also in the above-described embodiment, the suction devices switch between operation mode and nonoperation mode in accordance with the shape or the size of the workpiece detected by the laser light emitting device and the camera. Another possible example is that when the shape or the size of the workpiece is known in advance, it is not necessary to provide the laser light emitting device and the camera; the suction devices may switch between operation mode and nonoperation mode based on the known shape or size of the workpiece.

Also in the above-described embodiment, each of the suction devices is independently switchable between operation mode and nonoperation mode. Another possible example is to switch a unit of a predetermined number of suction devices (for example, each set of four suction devices) between operation mode and nonoperation mode. This facilitates the switching control of the plurality of suction devices.

Also in the above-described embodiment, the suction devices are arranged in a houndstooth pattern over the surface of the robot hand. Another possible example is to arrange the suction devices in a matrix.

Also in the above-described embodiment, the workpiece is held at the distal end of the robot hand. Another possible example is to hold the workpiece at the center of the robot hand.

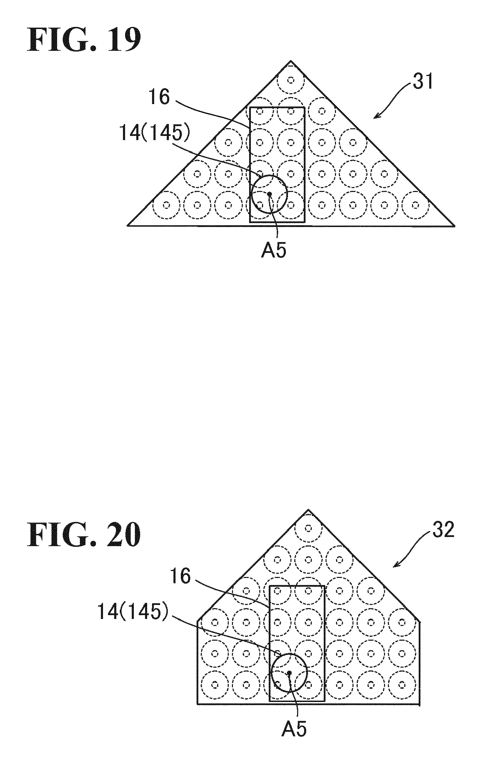

Also in the above-described embodiment, the robot hand has been illustrated as having an approximately square shape in plan view. Another possible example is a robot hand 31 according to a first modification shown in FIG. 19. In plan view, the robot hand 31 has an approximately triangular shape having two sides orthogonal to each other at the distal end portion of the robot hand 31. Still another possible example is a robot hand 32 according to a second modification shown in FIG. 20. The robot hand 32 has an approximately hexagonal shape having two sides orthogonal to each other at the distal end portion of the robot hand 32. The robot hand may also have a shape other than a polygonal shape such as an approximately square shape (examples including, but not limited to, an elliptical shape). Also in these modifications, at least one suction device among the suction devices that is disposed in the portion of the robot hand overlapping the workpiece switch to operation mode, and the rest of the suction devices switch to nonoperation mode.

Also in the above-described embodiment, a depalletizing operation has been illustrated, in which the workpieces stacked on the pallet are depalletized by the robot system. The robot system may also perform an operation other than the depalletizing operation, examples including, but not limited to, a palletizing operation.

Also in the above-described embodiment, the PC has been illustrated as controlling the operation of the robot (the robot system). It is also possible to use a PLC or a robot controller to control the operation of the robot.
- 6: PC (Controller)
- 7: Laser light emitting device (detector)
- 8: Camera (detector, image capture device)
- 12, 31, 32: Robot hand
- 12b, 12c: Side
- 100: Robot system
- 121: Suction device (holder)
- 200: Workpiece
- 201: Pallet (workpiece placement stand)
- 201a, 201b: Side

## Claims

1. A robot system 100, **characterized by**:
a robot hand 12, 31, 32 comprising a plurality of holders 121 configured to hold a workpiece placed on a workpiece placement stand 201 using at least one of electromagnetic force and suction force; and
a controller 6 configured to control the plurality of holders 121 to hold the workpiece while controlling the plurality of holders 121 to switch between operation mode and nonoperation mode in accordance with at least one of a shape and a size of the workpiece.

2. The robot system 100 according to claim 1, wherein the controller 6 is configured to control at least one holder 121 among the plurality of holders 121 to switch to operation mode, the at least one holder 121 being disposed in a portion of the robot hand 12, 31, 32 overlapping the workpiece, configured to control the at least one holder 121 to hold the workpiece, and configured to control a rest of the plurality of holders 121 to switch to nonoperation mode.

3. The robot system 100 according to claim 1 or 2, further comprising a detector 7, 8 configured to detect the shape or the size of the workpiece placed on the workpiece placement stand 201,
wherein the controller 6 is configured to control the robot hand 12, 31, 32 to hold the workpiece while controlling the plurality of holders 121 to switch between operation mode and nonoperation mode in accordance with at least one of the shape and the size of the workpiece detected by the detector 7, 8.

4. The robot system 100 according to claim 3,
wherein the detector 7, 8 comprises an image capture device 8 configured to capture an image of the workpiece, and
wherein based on the image of the workpiece captured by the image capture device 8, the controller 6 is configured to control at least one holder 121 among the plurality of holders 121 to switch to operation mode, the at least one holder 121 being disposed in a portion of the robot hand 12, 31, 32 overlapping the workpiece, configured to control the at least one holder 121 to hold the workpiece, and configured to control a rest of the plurality of holders 121 to switch to nonoperation mode.

5. The robot system 100 according to any one of claims 1 to 4, wherein the controller 6 is configured to control each of the plurality of holders 121 to independently switch between operation mode and nonoperation mode.

6. The robot system 100 according to any one of claims 1 to 5,
wherein the workpiece placement stand comprises an approximately rectangular shaped portion surrounding the workpiece,
wherein the robot hand 12, 31, 32 comprises a portion having two approximately orthogonal sides at a distal end of the robot hand 12, 31, 32, and
wherein the controller 6 is configured to control the robot hand 12, 31, 32 to hold the workpiece while controlling the robot hand 12, 31, 32 to rotate such that the two approximately orthogonal sides of the robot hand 12, 31, 32 are respectively approximately parallel to two sides of the workpiece placement stand 201, and while controlling the plurality of holders 121 to switch between operation mode and nonoperation mode in accordance with the shape of the workpiece.

7. The robot system 100 according to any one of claims 1 to 6, wherein the plurality of holders 121 are approximately evenly disposed over a surface of the robot hand 12, 31, 32.

8. A method for transferring a workpiece, **characterized by**:
switching a plurality of holders 121 between operation mode and nonoperation mode in accordance with at least one of a shape and a size of the workpiece, the plurality of holders 121 being mounted on a robot hand 12, 31, 32 and configured to hold the workpiece placed on a workpiece placement stand 201 using at least one of electromagnetic force and suction force; and
holding the workpiece while controlling the plurality of holders 121 to switch between operation mode and nonoperation mode.
